## Europäisches Patentamt

## European Patent Office

## Office européen des brevets

(19)

(11) Veröffentlichungsnummer: **0 099 494**

**B1**

(12)

# EUROPÄISCHE PATENTSCHRIFT

(45) Veröffentlichungstag der Patentschrift:
**18.05.88**

(51) Int. Cl.⁴: **G 01 N 21/47**

(21) Anmeldenummer: **83106309.4**

(22) Anmeldetag: **29.06.83**

(54) Vorrichtung zum Messen von Remissionen.

(30) Priorität: **14.07.82 DE 3226371**

(43) Veröffentlichungstag der Anmeldung:
**01.02.84 Patentblatt 84/5**

(45) Bekanntmachung des Hinweises auf die Patenterteilung:
**18.05.88 Patentblatt 88/20**

(84) Benannte Vertragsstaaten:
**AT BE CH DE FR GB IT LI NL SE**

(56) Entgegenhaltungen:
**EP-A-0 032 774**
**DE-A-1 960 398**
**US-A-3 718 399**

**PLASTE UND KAUTSCHUK, Band 16, Nr. 5, 1969,
Seiten 366-379; W. KÖNIG: "Glanz und seine
Messung"**

(73) Patentinhaber: **Bayer Diagnostic + Electronic
GmbH, Steinerstrasse 15, D-8000 München 70 (DE)**

(72) Erfinder: **Barry, Jürgen, Perlacher Strasse 30,
D-8000 München 90 (DE)**

(74) Vertreter: **Kirchner, Dietrich, Dr., c/o BAYER AG
Konzernverwaltung RP Patentabteilung, D-5090
Leverkusen, Bayerwerk (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 099 494 B1

## Beschreibung

Die Erfindung betrifft eine Vorrichtung zum Messen von Remissionen, die von einer in einem Meßfeld (R) angeordneten remittierenden Fläche remittiert werden, mit einem Empfänger und mehreren Sendern, deren diskrete Strahlenbündel das Meßfeld (R) beleuchten, und deren Emissionsflächen (SF) in einem parallel zur Meßfeldebene liegenden Ebene angeordnet sind, wobei die Achse des Senderlichtleitkabels (S) in einem gewählten Winkel β zur Flächennormalen des Meßfeldes (R) liegt und die Sendeflächen (SF) der Sendelichtleitfasern (S) unter diesem Winkel β angeschliffen sind.

Vorrichtungen dieser Art zum Messen von Remissionen sind aus EP-A2-32 774 bekaunt und dafür vorgesehen, die Remissionen von lichtremittierenden Flächen zu messen, die Remissionswerte und -veränderungen zu ermitteln und quantitativ zu erfassen. Bei bekannten Anordnungen mit nur einem Sender, der das Meßfeld mit nur einem Strahlenbündel, beispielsweise unter 45°, beleuchtet, sind die Strahlungswege zwischen der Lichtquelle und den einzelnen Punkten auf dem Meßfeld unterschiedlich lang. Da die Strahlungsintensität proportional dem Quadrat des Strahlungsweges ist, wird das Meßfeld nicht gleichmäßig beleuchtet, so daß unterschiedliche Strahlungsintensitäten an den einzelnen Punkten des Meßfeldes auftreten. Durch diese inhomogene Beleuchtung des Meßfeldes ergeben sich unterschiedliche Bewertungen der remittierenden Stellen des Meßfeldes, wodurch das Remissionsmeßergebnis beeinträchtigt wird. Da die einzelnen Punkte des Meßfeldes mit einer bestimmten Strahlungsintensität beaufschlagt werden müssen, sind relativ intensitätsstarke Strahlungsquellen erforderlich, die die Probe thermisch belasten. Um eine zu große thermische Belastung der Probe zu vermeiden, kann die Strahlungslichtquelle nicht beliebig nahe am Meßfeld angeordnet werden, so daß die Remissionsmeßvorrichtung eine bestimmte Baugröße aufweisen muß und daher die Freiheitsgrade bei der Konzipierung der Meßvorrichtung begrenzt sind.

Das aus EP-A2-32 774 bekannte optische Reflektometer soll für durchsichtige Materialien geeignet sein, besitzt eine optische Faser oder zwei getrennte optische Fasern, die die Meßfläche unter einem Winkel von etwa 45° beleuchtet bzw. beleuchten und eine optische Faser, die etwa senkrecht von der Meßfläche abgestrahltes Licht erfaßt, und ermöglicht zwar eine Verbesserung der Ausleuchtung des Meßfeldes, erlaubt jedoch keine vollständige, gleichmäßige Ausleuchtung der vorgesehenen Meßfläche.

Der Erfindung liegt daher die Aufgabe zugrunde, eine Vorrichtung zum Messen von Remissionen zu schaffen, bei der die einzelnen Stellen des Meßfeldes gleichmäßig und vollständig ausgeleuchtet und damit in gleicher Weise bewertet werden und kleine Abmessungen der Remissionsmeßvorrichtung möglich sind, ohne daß das Meßfeld thermisch zu stark belastet wird.

Diese Aufgabe wird beider eingangs dargelegten Vorrichtung erfindungsgemäß dadurch gelöst, daß die diskreten Strahlenbündel von einem aus mehreren Lichtleitfasern bestehenden Sendelichtleitkabel emittiert werden, und daß der Winkel β der Gleichung $n_i \sin \beta = \sin \sigma$ genügt, wobeib σ der Winkel zwischen der Achse eines Lichtkegels einer Lichtleitfaser und der Normalen des Meßfeldes (R) und $n_i$ die Brechzahl des Kernmaterials der Lichtleitfasern ist.

Durch die Ausleuchtung des Meßfeldes mit mehreren diskreten Strahlenbündeln und zur Meßfeldebene parallelen Emissionsflächen unter Beachtung der angegebenen Beziehung zwischen der Brechzahl des Kernmaterials der Lichtleitfasern und der Winkel β und σ ist der Strahlenweg zwischen den Emissionsflächen der einzelnen Sender und den einzelnen Punkten auf dem Meßfeld nicht nur gleich lang, sondern es ist auch eine vollständige Ausleuchtung der gewüschten Meßfläche gewährleistet, so daß die einzelnen Punkte des Meßfeldes vollständig und homogen ausgeleuchtet werden und damit eine gleichmäßige Bewertung möglich ist.

Darüberhinaus brauchen die einzelnen Strahlenbündel lediglich eine Mindeststrahlenintensität aufweisen, so daß eine minimale thermische Belastung des Meßfeldes bzw. der zu messen den Probe gewährleistet ist. Das hat zur Folge, daß die Sender nahe an dem Meßfeld angeordnet sein können, ohne daß die Probe einer zu starken thermischen Belastung ausgesetzt ist. Dadurch lassen sich kleine Abmessungen der Remissionsmeßvorrichtung bzw. eines Remissionsmeßkopfes erzielen.

Da die einzelnen Sender aus Lichtleitfasern eines Sendelichtleitkabels bestehen, kann die thermische Belastung der Probe noch weiter verringert werden, da die Lichtquelle von der Probe entfernt angebracht werden kann und/oder da die Wärmestrahlungs-Komponenten (IR-Anteil) von den Lichtleitern nicht oder weniger durchgelassen werden.

Durch die erfindungsgemäßen Maßnahmen ergibt sich ein sehr einfacher und kompakter Aufbau der Remissionsvorrichtung, was insbesondere vorteilhaft ist, wenn aufgrund der Einbaubedienungen in Geräten Remissionsmeßköpfe mit kleinen Abmessungen erforderlich sind. Remissionsmeßköpfe nach der vorliegenden Erfindung gewährleisten eine vollständige und gleichmäßige Einstrahlung der diskreten Strahlenbündel auf das Meßfeld bei gleichen Lichtwegen.

Weiterhin ist es vorteilhaft, daß zum Empfang der vom Meßfeld remittierten Strahlung ein aus mehreren Lichtleitfasern bestehendes Empfangs-Lichtleitkabel (E) vorgesehen ist. Dadurch ist eine noch gleichmäßigere Bewertung der remittierten Strahlung hinsichtlich der einzelnen Meßfeldpunkte möglich.

Vorzugsweise sind die Empfangsflächen der Lichtleitfasern in einer parallel zur Meßfeldebene liegenden Ebene angeordnet. Diese Maßnahme verbessert ebenfalls die homogene Bewertung des Meßfeldes. Das aus den einzelnen Lichtleitfasern bestehende Empfangs-Lichtleitkabel kann vorzugsweise so angeschliffen werden, daß die Eintrittsfläche des Empfangs-Lichtleitkabels parallel zur Meßfeldebene liegt. Es ist auch möglich, ein Empfangs-Lichtleitkabel, dessen Empfangsebene senkrecht zur Achse des Empfangslichtleitkabels liegt, so anzuordnen, daß das Empfangslichtleitkabel hinsichtlich seiner Mittelachse senkrecht zur Meßfeldebene angeordnet ist.

Ein einfacher Aufbau der Remissionsmeßvorrichtung ergibt sich insbesondere dadurch, daß die Empfangsfläche des Empfangslichtleiters und die Sendefläche des Sendelichtleiters in einer Ebene liegen.

Insbesondere dann, wenn das Empfangslichtleitkabel mit seiner Mittelachse senkrecht zur Meßfeldebene angeordnet ist, kann das Empfangslichtleitkabel durch einen Empfangslichtleitstab oder auch durch eine Blendenanordnung ersetzt werden.

Vorzugsweise ist das Meßfeld durch eine Blende mit gewünschter Fläche und Form begrenzt. Dadurch wird verhindert, daß Randabfälle der Strahlenbündel das Meßergebnis nachteilig beeinflussen. Alternativ oder zusätzlich ist es auch möglich, daß die Form der Senderlichtleitkabel-Emissionsfläche und/oder der Empängerlichtleitkabel-Empfangsfläche die Form des Meßfelds aufweist. Auch dies führt dazu, daß beliebige Meßfeldformen ohne Beeinflussung des Meßergebnisses ausgemessen werden können.

Die Emissionsfläche des Sendelichtleiters und des Empfangslichtleiters ist vorzugsweise größer oder gleich dem Meßfeld. Dadurch wird vermieden, daß das Meßergebnis durch Randabfälle der Intensität der Senderstrahlungsbündel und der Remissionsstrahlung nachteilig beeinflußt wird.

Eine weitere bevorzugte Ausführungsform der vorliegenden Erfindung besteht darin, daß die durch die geometrischen Mittelpunkte der Emissionsfläche des Sendelichtleitskabels und der Empfangsfläche des Empfangslichtleitkabels bzw. Lichtleitstabs gehenden Achsen der abgestrahlten bzw. empfangenen Lichtkegel sich in einem Punkt schneiden, in dem der geometrische Mittelpunkt des Meßfelds liegt. Dadurch wird sowohl eine symmetrische Ausleuchtung des Meßfelds als auch ein symmetrischer Empfang des remittierenden Lichts von der Meßfläche gewährleistet, und es werden Strahlungsrandabfälle vermieden, die andernfalls das Meßergebnis nachteilig beeinflussen könnten.

Gemäß einer weiteren bevorzugten Ausführungsform ist die durch den geometrischen Mittelpunkt der Empfangsfläche des Empfangslichtleitkabels gehende Achse die durch den geometrischen Mittelpunkt des Meßfeldes gehende Normale. Dieser einfache Aufbau gewährleistet auch einen symmetrischen Empfang der remittierenden Strahlung unter Vermeidung von Randabfällen, so daß eine gleichmäßige Bewertung des Meßfeldes gewährleistet ist.

Vorteilhaft ist weiterhin, den Winkel σ zwischen der Achse der Strahlenbündel der Sender und der Normalen des Meßfeldes im wesentlichen mit 45° zu wählen. Für Remissionsmessungen ist dies der bevorzugte Einfallswinkel, wobei die remittierende Strahlung senkrecht zur Remissionsfläche gemessen wird (sogenannte 45° -0° -Anordnung).

Umgekehrt ist es auch möglich, die diskreten Strahlenbündel der Sender senkrecht auf das Meßfeld einfallen zu lassen und das remittierende Licht unter einem Winkel von 0 bis 90°, vorzugsweise unter einem Winkel von 45° zu empfangen.

Der Aperturwinkel δ der Sendelichtleitfasern des Sendelichtleitkabels sollte vorzugsweise kleiner als 15° sein um möglichst punktförmige bzw. kleine Durchmesser aufweisende Lichtkegel zu erhalten und damit das Meßfeld Punkt für Punkt mit kleinen Lichtpunkten ausleuchten zu können.

Gemäß einer weiteren bevorzugten Ausführungsform ist der Aperturwinkel ε der Empfangslichtleitfasern 30°. Wenn der Aperturwinkel δ der Sendelichtleitfasern kleiner als 15° und der Aperturwinkel ε der Empfangslichtleitfasern 30° gewählt wird, kann damit ohne zusätzliche Maßnahmen eine 45°-Reflektion (Glanzreflexion) ausgeschlossen werden, die andernfalls das Meßerbnis nachteilig beeinflussen kann.

Eine Blende ist vorzugsweise auf einer Glasplatte vorgesehen, die eine Auflagefläche für das remittierende Material darstellt.

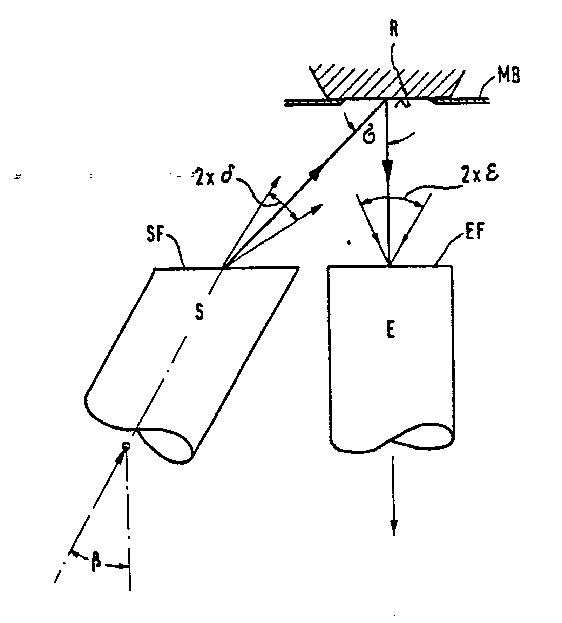

Die Erfindung wird nachstehend anhand einer einzigen Zeichnung beispielsweise erläutert.

Bei dem dargestellten und nachfolgend beschriebenen Ausführungsbeispiel handelt es sich um die sogenannte 45° -0° -Anordnung, die bei Remissionsmessungen bevorzugt wird und auch in DIN-Normen erwähnt ist.

Bei dieser Ausführungsform werden für die Sender und den Empfänger Lichtleitkabel verwendet. Die Mittelachse des Sendelichtleitkabels S weist zur Normalen der Meßfeldebene einen Winkel β auf. Die Austrittsfläche SF des Sendelichtleitkabels (S) ist unter diesem Winkel β angeschliffen, so daß die Austrittsfläche SF der Meßfeldebene parallel liegt. Die Mittelachsen der von den einzelnen Lichtleitfasern des Sendelichtleitkabels S abgegebenen Strahlenbündel fallen unter einem Winkel σ von 45° auf das Meßfeld R auf.

Die Mittelachse des Empfangslichtleitkabels steht senkrecht zur Meßfeldebene und die Eintrittsfläche EF des Empfangslichtleitkabels E liegt zur Meßfeldebene parallel. Bei dem vorliegenden Ausführungsbeispiel liegen die Austrittsfläche SF des Sendelichtleitkabels SF und die Eintrittsfläche EF des Empfangslichtleitkabels E in einer Ebene. Die Flächenformen der Austrittsfläche SF des Sendelichtleitkabels S und/oder der Eintrittsfläche EF des Empfangslichtleitkabels E sind entsprechend der Form des Meßfeldes R bzw. entsprechend der Form der Blende MB gewählt. Dadurch werden Randabfälle der Senderstrahlenbündel und des remittierenden Lichts weitgehend vermieden, so daß das Meßergebnis durch Randabfälle nicht beeinflußt wird. Randabfälle der Strahlung können weiterhin dadurch vermieden werden, daß, wie es bei den vorliegenden Ausführungsbeispiel der Fall ist, die durch die geometrischen Mittelpunkte der im Emissionsfläche des Sendelichtleitkabels und der Eintrittsfläche des Empfangslichtleitkabels gehenden Achsen sich in einem Punkt schneiden, in dem der geometrische Mittelpunkt des Meßfelds liegt. Dadurch ist eine Symmetrie gewährleistet, die eine gleichmäßige Bewertung der einzelnen Punkte des Meßfeldes gewährleistet und Einflüsse des Meßergebnisses durch Randabfälle vermeidet. Die Emissionsfläche SF des Sendelichtleitkabels S und/oder die Empfangsfläche EF des Empfangslichtleitkabels E sind vorzugsweise mindestens so groß wie das Meßfeld, das durch eine Blende MB begrenzt sein kann. Im vorliegenden Fall sind die Emissionsfläche SF die Empfangsfläche EF und das Meßfeld R kreisförmig. Die genannten Flächen können jedoch auch eine andere Form aufweisen, wobei es jedoch vorteilhaft ist, für die Flächen jeweils gleiche Formen zu wählen.

Selbstverständlich ist es auch möglich, bei der vorliegenden Ausführungsform das Sendelichtleitkabel durch das Empfangslichtleitkabel auszutauschen und umgekehrt.

**Patentansprüche**

1. Vorrichtung zum Messen von Remissionen, die von einer in einem Meßfeld (R) angeordneten remittierenden Fläche remittiert werden, mit einem Empfänger und mehreren Sendern, deren diskrete Strahlenbündel das Meßfeld (R) beleuchten, und deren Emissionsflächen (SF) in einem parallel zur Meßfeldebene liegenden Ebene angeordnet sind, wobei die Achse des Sendelichtleitkabels (S) in einem gewählten Winkel β zur Flächennormalen des Meßfeldes (R) liegt und die Sendeflächen (SF) der Sendelichtleitfasern (S) unter diesem Winkel β angeschliffen sind, dadurch gekennzeichnet, daß die diskreten Strahlenbündel von einem aus mehreren Lichtleitfasern bestehenden Sendelichtleitkabel (S) emittiert werden, und daß der Winkel β der Gleichung

$$n_i \sin \beta = \sin \sigma$$

genügt, wobei σ der Winkel zwischen der Achse eines Lichtkegels einer Lichtleitfaser und der Normalen des Meßfeldes (R) und $n_i$ die Brechzahl des Kernmaterials der Lichtleitfasern ist.

2. Vorrichtung nach Anspruch 1, dadurch gekennzeichnet, daß ein aus mehreren Lichtleitfasern bestehendes Empfangs-Lichtleitkabel (E) zur Aufnahme der vom Meßfeld (R) remittierten Strahlung vorgesehen ist.

3. Vorrichtung nach Anspruch 2, dadurch gekennzeichnet, daß die Empfangsflächen der Empfangs-Lichtleitfasern in einer parallel zur Meßfeldebene liegenden Ebene angeordnet sind.

4. Vorrichtung nach einem der Ansprüche 1 bis 3, dadurch gekennzeichnet, daß die Empfangsfläche (EF) des Empfangslichtleitkabels (E) und die Sendefläche (SF) des Sendelichtleitkabels (S) in einer Ebene liegen.

5. Vorrichtung nach Anspruch 1, dadurch gekennzeichnet, daß als Empfänger ein Lichtleitstab vorgesehen ist.

6. Vorrichtung nach einem der Ansprüche 1 bis 5, dadurch gekennzeichnet, daß das Meßfeld (R) durch eine Blende (MB) begrenzt ist.

7. Vorrichtung nach einem der Ansprüche 1 bis 6, dadurch gekennzeichnet, daß die Form der Senderfläche (SF) des Senderlichtleitkabels (S) und/oder der Empfangsfläche (EF) des Empfangslichtleitkabels (E) bzw. des Lichtleitstabs die Form des Meßfelds (R) aufweist.

8. Vorrichtung nach Anspruch 7, dadurch gekennzeichnet, daß die Senderfläche (SF) des Senderlichtleitkabels (S) und/ oder die Empfangsfläche (EF) des Empfangslichtleitkabels (E) bzw. das Lichtleitstabs größer als das oder gleich dem Meßfeld (R) ist.

9. Vorrichtung nach einem der Ansprüche 1 bis 8, dadurch gekennzeichnet, daß die durch den geometrischen Mittelpunkt der Emissionsfläche (SF) des Senderlichtleitkabels (S) und der Empfangsfläche (EF) des Empfangslichtleitkabels (E) bzw. Lichtleitstabs gehenden Achsen der abgestrahlten bzw. empfangenen Lichtkegel sich in einem Punkt schneiden, in dem der geometrische Mittelpunkt des Meßfelds (R) liegt.

10. Vorrichtung nach Anspruch 9, dadurch gekennzeichnet, daß die durch den geometrischen Mittelpunkt der Empfangsfläche (EF) des Empfangslichtleitkabels (E) bzw. Lichtleitstabs gehendene Achse die durch den geometrischen Mittelpunkt des Meßfelds (R) gehende Normale ist.

11. Vorrichtung nach einem der Ansprüche 1 bis 10, dadurch gekennzeichnet, daß der Winkel σ zwischen den Achsen des Senderstrahlenbündels und der Normalen des Meßfeldes (R) im wesentlichen 45° ist.

12. Vorrichtung nach einem der Ansprüche 1 bis 11, dadurch gekennzeichnet, daß der Aperaturwinkel δ der Senderlichtleitfasern kleiner als 15° ist.

13. Vorrichtung nach einem der Ansprüche 1 bis 12, dadurch gekennzeichnet, daß der Aperturwinkel ε der Empfangslichtleitfasern bzw. des Empfangslichtleitstabs kleiner als 30° ist.

14. Vorrichtung nach Anspruch 6, dadurch gekennzeichnet, daß die Blende (MB) auf einer Glasplatte vorgesehen ist, die eine Auflagefläche für das remittierende Material darstellt.

15. Vorrichtung nach einem der Ansprüche 1 bis 4 und 6 bis 14, dadurch gekennzeichnet, daß die diskreten Strahlenbündel der Sender senkrecht auf das Meßfeld einfallen und das remittierende Licht unter einem Winkel von 0° bis 90°, vorzugsweise unter einem Winkel von 45°, empfangen wird.

**Patentansprüche**

1. Apparatus for the measurement of reflectances reflected from a reflective surface arranged in a measuring field (R), comprising a receiver and a plurality of transmitters whose discrete bundles of rays illuminate the measuring field (R) and whose emission surfaces (SF) are arranged in a plane parallel to the plane of the measuring field, the axis of the optical fibre cable (S) conducting transmitted light being set at a selected angle β to the surface normal of the measuring field (R) and the transmission surfaces (SF) of the transmitting optical fibres (S) being cut at this angle, characterised in that the discrete bundles of rays are emitted from a transmitted light conducting cable (S) composed of a plurality of optical fibres and in that the angle β satisfies the equation

$$n_i \sin \beta = \sin \sigma$$

where σ is the angle between the axis of a light cone of an optical fibre and the normal to the measuring field (R) and $n_i$ is the refractive index of the core material of the optical fibres.

2. Apparatus according to claim 1, characterised in that a receiving optical fibre cable (E) composed of a plurality of optical fibres is provided for receiving the radiation reflected from the measuring field (R).

3. Apparatus according to claim 2, characterised in that the receiving surfaces of the receiving optical fibres are arranged in a plane parallel to the plane of the measuring field.

4. Apparatus according to one of the claims 1 to 3, characterised in that the receiving surface (EF) of the receiving optical fibre cable (E) and the transmitting surface (SF) of the transmitting optical fibre cable (S) lie in one plane.

5. Apparatus according to claim 1, characterised in that a photoconductive rod is provided as receiver.

6. Apparatus according to one of the claims 1 to 5, characterised in that the measuring field (R) is bounded by a shutter (MB).

7. Apparatus according to one of the claims 1 to 6, characterised in that the form of the transmitting surface (SF) of the transmitting optical fibre cable (S) and/or of the receiving surface (EF) of the receiving optical fibre cable (E) or of the light conducting rod has the form of the measuring field (R).

8. Apparatus according to claim 7, characterised in that the transmitting surface (SF) of the transmitting optical fibre cable (S) and/or the receiving surface (EF) of the receiving optical fibre cable (E) or of the light-conducting rod is greater than or equal to the measuring field (R).

9. Apparatus according to one of the claims 1 to 8, characterised in that the axes of the reflected or received light cones passing through the geometrical centre of the emission surface (SF) of the transmitting optical fibre cable (S) and of the receiving surface (EF) of the receiving optical fibre cable (E) or lightconducting rod intersect at a point at which the geometrical centre of the measuring field (R) lies.

10. Apparatus according to claim 9, characterised in that the axis passing through the geometrical centre of the receiving surface (EF) of the receiving optical fibre cable (E) or light-conducting rod is the normal passing through the geometrical centre of the measuring field (R).

11. Apparatus according to one of the claims 1 to 10, characterised in that the angle σ between the axis of the bundle of transmitted rays and the normal to the measuring field (R) is substantially 45°.

12. Apparatus according to one of the claims 1 to 11, characterised in that the aperture angle of the transmitting optical fibres δ is less than 15°.

13. Apparatus according to one of the claims 1 to 12, characterised in that the aperture angle of the receiving optical fibres δ or the receiving light conducting rod is less than 30°.

14. Apparatus according to claim 6, characterised in that the shutter (MB) is provided on a glass plate which constitutes a supporting surface for the reflective material.

15. Apparatus according to one of the claims 1 to 4 and 6 to 14, characterised in that the discrete bundles of rays of the transmitters encounter the measuring field at rightangles and the reflecting light is received at an angle of from 0° to 90°, preferably at an angle of 45°.

**Revendications**

1. Dispositif pour la mesure de réémissions, lesquelles sont réémises par une surface réémettrice placée dans un champ de mesure (R), avec un récepteur et plusieurs émetteurs dont les faisceaux de rayons discrets éclairent le champ de mesure (R) et dont les surfaces d'émission (SF) sont placées dans un plan parallèlement au plan du champ de mesure, l'axe du câble émetteur conducteur de la lumière (S) étant situé suivant un angle choisi β par rapport à la normale de la surface du champ de mesure (R) et les surfaces émettrices (SF) des fibres émettrices conductrices de la lumière (S) étant taillées suivant cet angle β, caractérisé en ce que les faisceaux de rayons discrets sont émis par un câble émetteur conducteur de la lumière (S) composé de plusieurs fibres conductrices de la lumière et en ce que l'angle β satisfait à l'équation

$$n_i \sin \beta = \sin \sigma,$$

en l'occurence σ étant l'angle entre l'axe d'un cône de lumière d'une fibre conductrice de la lumière et la normale du champ de mesure (R) et $n_i$ l'indice de réfraction du matériau de noyau des fibres conductrices de la lumière.

2. Dispositif selon la revendication 1, caractérisé en ce qu'un câble récepteur conducteur de la lumière (E) consistant en plusieurs fibres conductrices de la lumière est prévu pour la réception du rayonnement réémis par le champ de mesure (R).

3. Dispositif suivant la revendication 2, caractérisé en ce que les surfaces réceptrices des fibres de réception conductrices de la lumière sont dans un plan situé parallèlement au plan du champ de mesure.

4. Dispositif selon l'une des revendications 1 à 3, caractérisé en ce que la surface de réception (EF) du câble récepteur conducteur de la lumière (E) et la surface d'émission (SF) du câble émetteur conducteur de la lumière (S) sont situées dans un plan.

5. Dispositif selon la revendication 1, caractérisé en ce qu'il est prévu comme récepteur un barreau conducteur de la lumière.

6. Dispositif selon l'une des revendications 1 à 5, caractérisé en ce que le champ de mesure (R) est limité par un diaphragme (MB).

7. Dispositif selon l'une des revendications 1 à 6, caractérisé en ce que la forme de la surface d'émission (SF) du câble émetteur conducteur de la lumière (S) et/ou de la surface de réception (EF) du câble récepteur conducteur de la lumière (E) ou du barreau conducteur de la lumière épouse la forme du champ de mesure (R).

8. Dispositif selon la revendication 7, caractérisé en ce que la surface d'émission (SF) du câble émetteur conducteur de la lumière (S) et/ou la surface de réception (EF) du câble récepteur conducteur de la lumière (E) ou du barreau conducteur de la lumière sont supérieures ou égales à celle du champ de mesure (R).

9. Dispositif suivant l'une des revendications 1 à 8, caractérisé en ce que les axes des cônes de lumière émis ou reçus, passant par le point géométrique central de la surface d'émission (SF) du câble émetteur conducteur de la lumière (S) et de la surface de réception (EF) du câble récepteur conducteur de la lumière (E) se coupent en un point où le point géométrique central du champ de mesure (R) est situé.

10. Dispositif selon la revendication 9, caractérisé en ce que l'axe passant par le point géométrique central de la surface de réception (EF) du câble récepteur conducteur de la lumière (E) ou du barreau conducteur de la lumière est la normale passant par le point géométrique central du champ de mesure (R).

11. Dispositif selon l'une des revendications 1 à 10, caractérisé en ce que l'angle σ entre les axes du faisceau de rayons d'émission et de la normale du champ de mesure (R) est essentiellement de 45°.

12. Dispositif selon l'une des revendications 1 à 11, caractérisé en ce que l'angle d'ouverture des fibres émettrices conductrices de la lumière δ est inférieur à 15°.

13. Dispositif selon l'une des revendications 1 à 12, caractérisé en ce que l'angle d'ouverture des fibres réceptrices conductrices de la lumière ε ou du barreau récepteur conducteur de la lumière est inférieur à 30°.

14. Dispositif selon la revendication 6, caractérisé en ce que le diaphragme (MB) est prévu sur une plaque de verre qui constitue un porte-objet pour le matériau réémetteur.

15. Dispositif selon l'une des revendications 1 à 4 et 6 à 14, caractérisé en ce que les faisceaux de rayons discrets de l'émetteur tombent perpendiculairement sur le champ de mesure et en ce que la lumière réémise est reçue suivant un angle de 0° à 90°, de préférence suivant un angle de 45°.